Europäisches Patentamt

European Patent Office

Office européen des brevets

(19)

(11) **EP 1 116 983 A1**

(12) # DEMANDE DE BREVET EUROPEEN

(43) Date de publication:
**18.07.2001 Bulletin 2001/29**

(51) Int Cl.⁷: **G02C 7/02**, G02C 7/04

(21) Numéro de dépôt: **00403664.6**

(22) Date de dépôt: **22.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **14.01.2000 FR 0000466**

(71) Demandeur: **ESSILOR INTERNATIONAL (Compagnie Générale d'Optique) F-94220 Charenton-le-Pont (FR)**

(72) Inventeurs:
- **Chateau, Nicolas**
 **75013 Paris (FR)**
- **Fermigier, Bruno**
 **75011 Paris (FR)**
- **Legras, Richard**
 **92350 le Plessis Robinson (FR)**

(74) Mandataire: **CABINET BONNET-THIRION BP 966, 12 Avenue de la Grande-Armée 75829 Paris Cedex 17 (FR)**

(54) **Jeu de deux lentilles ophtalmiques, gamme et procédé pour constituer un tel jeu**

(57)   Les deux lentilles (2H, 3P) du jeu sont du type à vision simultanée progressive, avec l'une (2H) des lentilles dont le profil progressif varie de sorte que la puissance est plus importante au centre qu'en périphérie alors que pour l'autre lentille (3P) c'est l'inverse.

La gamme comporte deux séries de lentilles dont la puissance nominale s'échelonne suivant un pas pré-déterminé, par exemple de 0,25 dioptries.

Le procédé comporte un examen optométrique standard, la détermination de l'oeil offrant la meilleure tolérance à une défocalisation myopique, et pour chaque oeil la sélection d'une lentille dans une série respective de la gamme, en fonction des résultats de cet examen.

FIG.2

EP 1 116 983 A1

**Description**

L'invention a trait aux lentilles ophtalmiques capables de corriger la vision d'un porteur presbyte.

On sait que la presbytie est un manque d'accommodation du cristallin qui apparaît avec l'âge et qui a pour conséquence de nécessiter, pour la vision de près, une correction généralement appelée addition.

On sait également qu'il est possible de corriger la presbytie en équipant chacun des yeux du porteur d'une lentille ophtalmique, c'est-à-dire d'une lentille de contact ou d'un implant intraoculaire, et qu'il existe diverses solutions pour permettre au porteur de voir net un objet situé à n'importe quelle distance, que cet objet soit près, éloigné ou à une distance intermédiaire.

En particulier, il existe des lentilles basées sur le principe optique de la vision simultanée, selon lequel la puissance de correction varie en fonction de la distance par rapport à l'axe optique de sorte que plusieurs images se forment simultanément sur la rétine, l'image utile étant sélectionnée par tri cortical.

Les brevets français 2 462 854, 2 701 770 et 2 737 312, appartenant à la titulaire, décrivent en détail de telles lentilles ophtalmiques à vision simultanée, ces lentilles étant en outre progressives, c'est-à-dire avec toutes les variations de puissance qui se font de manière douce, et non brutale. Dans ces lentilles, la répartition de la puissance en fonction de la distance par rapport à l'axe optique s'effectue selon un profil progressif s'inscrivant entre une courbe enveloppe inférieure et une courbe enveloppe supérieure répondant chacune à une expression polynomiale.

Les lentilles de ce type ont de préférence leur puissance maximale qui se situe au centre, de sorte que la vision de près, qui nécessite une addition de puissance en raison de la presbytie, utilise le centre de la portion correctrice de la lentille, tandis que la vision de loin utilise la périphérie de cette portion correctrice, c'est-à-dire, en général, au-delà de 2 mm de distance par rapport à l'axe optique, la puissance étant généralement maintenue constante ou à peu près dans cette partie périphérique.

Ces lentilles, à vision de près centrale, permettent en effet de profiter du phénomène de myosis de proximité, c'est-à-dire du phénomène selon lequel, lorsqu'un porteur observe un objet rapproché, par exemple en situation de lecture, le diamètre de sa pupille est réduit par rapport au diamètre pris par celle-ci lorsque le porteur observe un objet lointain : ainsi, lorsque le porteur observe un objet rapproché, il utilise essentiellement la zone centrale de la portion correctrice de la lentille, qui corrige la vision de près, alors que quand le porteur observe un objet éloigné, il utilise toute la portion correctrice, et en particulier la zone périphérique de celle-ci, qui lui procure l'image utile pour la vision de loin.

Dans la pratique, les lentilles ophtalmiques à vision simultanée progressive sont donc commercialisées de préférence avec une zone de vision de près centrale, la possibilité étant donnée de choisir les caractéristiques suivantes :

- le rayon de courbure interne et/ou le diamètre total de la lentille en fonction de la géométrie de la cornée de l'oeil devant être équipé par la lentille ;
- la puissance nécessaire à la correction de la vision de loin de l'oeil devant être équipé de la lentille, c'est-à-dire la puissance nécessaire pour corriger l'éventuelle myopie ou hypermétropie de cet oeil ; et
- l'amplitude ainsi que la répartition, en fonction de la distance par rapport à l'axe optique, de la différence de puissance de la lentille par rapport à la puissance nécessaire à la correction de la vision de loin, c'est-à-dire le profil-type progressif de la lentille, choisi en fonction de l'addition requise par le porteur pour la vision de près.

Il est ainsi généralement proposé trois à quatre profils-type progressifs différents, correspondant par exemple respectivement à une addition de 1,25 dioptrie, de 2,00 dioptries et 2,75 dioptries, avec une puissance variant, en fonction de la distance par rapport à l'axe optique, d'une façon qui convient à la très grande majorité des porteurs.

Il existe toutefois certains porteurs dont les caractéristiques pupillaires s'éloignent de la moyenne.

Pour que ces porteurs soient corrigés de façon satisfaisante, on a déjà proposé, notamment dans le brevet français 2 701 770 susmentionné, qu'en particulier la zone centrale consacrée à la vision de près soit ajustée en fonction du porteur.

Il est possible, par exemple, de prévoir à cet effet trois types différents de répartition de la puissance.

Dans un tel cas, si l'on propose également, comme dans l'exemple ci-dessus, trois amplitudes de variation correspondant à certaines valeurs d'addition, il faut en tout offrir neuf profils-type progressifs différents.

Il en résulte, compte tenu de la nécessité de faire varier également la puissance nécessaire à la correction de l'éventuelle myopie ou hypermétropie de l'oeil et de la possibilité de choisir le rayon de courbure interne et/ou le diamètre total de la lentille, que la gamme à offrir pour procurer une correction satisfaisante pour la quasi-totalité des porteurs, comprend un nombre extrêmement important de lentilles différentes, et exige donc le maintien d'un stock vaste et coûteux.

L'invention vise à permettre au contraire de fournir à la quasi-totalité des porteurs presbytes une correction optimale avec une gamme dont le nombre de lentilles différentes est limité.

Elle propose à cet effet, sous un premier aspect, un jeu de deux lentilles ophtalmiques à vision simultanée progressive pour corriger la vision d'un porteur presbyte, comportant une première lentille pour la correction d'un premier oeil dudit porteur et une seconde lentille pour la correction de son second oeil, chacune desdites première lentille et seconde lentille comportant une portion correctrice dont la puissance, hors éventuelle correction d'astigmatisme, varie, en fonction de la distance par rapport à l'axe optique, suivant un profil progressif respectif s'inscrivant dans une zone comprise entre une courbe enveloppe inférieure et une courbe enveloppe supérieure répondant chacune à une expression polynomiale respective prédéterminée ; caractérisé en ce que :

- pour ladite première lentille, le profil progressif suivant lequel la puissance, hors éventuelle correction d'astigmatisme, varie, en fonction de la distance par rapport à l'axe optique, est tel que cette puissance est plus importante à 0,4 mm qu'à 2 mm de distance par rapport à l'axe optique et tel que cette puissance, entre 2 mm et 2,4 mm de distance par rapport à l'axe optique, ne varie pas de plus de 0,5 dioptrie ; et
- pour ladite seconde lentille, le profil progressif suivant lequel la puissance, hors éventuelle correction d'astigmatisme, varie, en fonction de la distance par rapport à l'axe optique, est tel que cette puissance est moins importante à 0,4 mm qu'à 2 mm de distance par rapport à l'axe optique et tel que cette puissance, entre 2 mm et 2,4 mm de distance par rapport à l'axe optique, ne varie pas de plus de 0,5 dioptrie.

Ainsi, contrairement à tous les jeux de deux lentilles ophtalmiques à vision simultanée progressive connus, dans lesquels les deux lentilles ont leur puissance qui varie dans le même sens du centre vers la périphérie, sens qui est de préférence décroissant, les deux lentilles du jeu selon l'invention varient en sens opposés, la puissance étant décroissante du centre vers la périphérie de la portion correctrice de la première lentille tandis que la puissance est croissante pour la seconde lentille.

Etant donné que la puissance est constante ou à peu près en périphérie de la portion correctrice de chaque lentille, la première lentille perturbe peu la vision de loin tandis que la seconde lentille perturbe peu la vision de près, de sorte que les performances de la première lentille et de la seconde lentille, quel que soit le porteur qui les utilise, sont toujours satisfaisantes respectivement en vision de loin et en vision de près.

La paire de lentilles selon l'invention garantit donc, pour la quasi-totalité des porteurs presbytes, une acuité visuelle satisfaisante de près et de loin, cette paire de lentilles apportant également, du fait que les lentilles sont chacune à vision simultanée progressive, une très bonne correction de la vision aux distances intermédiaires, de sorte que le porteur équipé du jeu de deux lentilles conforme à l'invention a une vision performante à toutes les distances.

On notera, vis-à-vis d'une paire de lentilles mettant en oeuvre la méthode de compensation de la presbytie généralement appelée monovision, consistant à adapter à un oeil une lentille corrigeant uniquement la vision de loin et à l'autre oeil une lentille corrigeant uniquement la vision de près, que le jeu de deux lentilles selon l'invention offre l'avantage de corriger la vision aux distances intermédiaires, et aussi d'éviter ou en tout cas d'amoindrir considérablement les effets de gêne binoculaire existant en monovision du fait du décalage de puissance entre les deux yeux qui a parfois un effet inhibiteur sur des fonctions binoculaires essentielles comme la vision stéréoscopique.

Il semble que cette suppression ou cet amoindrissement de la gêne binoculaire soit dû au fait que les optiques à vision simultanée progressive, en augmentant la profondeur de champ de l'oeil, réduisent les différences de focalisation perçues entre les deux yeux.

On observera par ailleurs, vis-à-vis des lentilles ophtalmiques à vision simultanée progressive connues, que dans le jeu de lentilles conforme à l'invention, l'amplitude de la différence de puissance entre le centre et la périphérie de la portion correctrice, ainsi d'ailleurs que la répartition de cette différence de puissance en fonction de la distance par rapport à l'axe optique, c'est-à-dire le profil-type progressif de la lentille, n'a pas à être choisi en fonction de l'addition requise par le porteur pour la vision de près, mais qu'au contraire la première lentille peut avoir un profil-type progressif unique quel que soit le porteur, et de même pour la seconde lentille.

En effet, dans le jeu de deux lentilles conforme à l'invention, la valeur d'addition nécessaire au porteur est prise en compte non pas par le choix d'un profil-type progressif, mais par le choix de la puissance que présente la seconde lentille en périphérie de sa portion correctrice, cette puissance étant en pratique prise égale à la somme de l'addition nécessaire au porteur et de la puissance nécessaire à la correction de l'éventuelle myopie ou hypermétropie de l'oeil devant recevoir la seconde lentille.

L'invention offre ainsi la possibilité de corriger la vision de n'importe quel porteur presbyte, quelle que soit l'addition qu'il requiert, avec seulement deux profils-type progressifs différents, respectivement pour le premier oeil et pour le second oeil des porteurs à équiper.

La gamme de lentilles correspondante peut donc être particulièrement réduite, puisqu'il suffit qu'elle comporte une série de lentilles d'un premier type dont les profils progressifs respectifs sont en correspondance les uns des autres par translation selon un pas de puissance prédéterminé, ces profils étant tels que la puissance est plus importante au centre qu'en périphérie de la portion correctrice, et qu'elle comporte une série de lentilles d'un second type dont les profils progressifs respectifs sont en correspondance les uns des autres par translation selon un pas de puissance prédéterminé, par exemple le même pas que pour la série de lentilles de premier type, ces profils étant tels que la puissance est moins importante au centre qu'en périphérie de la portion correctrice.

Selon des caractéristiques préférées, en raison de la qualité des résultats obtenus, pour chacune desdites première lentille et seconde lentille :

- la différence de puissance, entre 0,4 mm et 2,4 mm de distance par rapport à l'axe optique, est, hors éventuelle correction d'astigmatisme, d'au moins une dioptrie en valeur absolue ; et/ou
- la puissance, hors éventuelle correction d'astigmatisme, varie, à 1 mm de l'axe optique, d'au plus 5 dioptries par millimètre ; et/ou
- la puissance, hors éventuelle correction d'astigmatisme, varie, à 2 mm de l'axe optique, d'au plus 1 dioptrie par millimètre.

Selon d'autres caractéristiques préférées, toujours en raison de la qualité des résultats obtenus :

- pour ladite première lentille, le profil progressif suivant lequel la puissance, hors éventuelle correction d'astigmatisme, varie, en fonction de la distance par rapport à l'axe optique, s'inscrit entre une courbe enveloppe inférieure et une courbe enveloppe supérieure, répondant respectivement aux équations suivantes :

$$P1_{inf}(h) = P_{VL1} + A(h) - 0,18$$

$$P1_{sup}(h) = P_{inf}(h) + 0,36$$

- pour ladite seconde lentille, le profil progressif suivant lequel la puissance, hors éventuelle correction d'astigmatisme, varie, en fonction de la distance par rapport à l'axe optique, s'inscrit entre une courbe enveloppe inférieure et une courbe enveloppe supérieure répondant respectivement aux équations suivantes :

$$P2_{inf}(h) = P_{VL2} + P_{ADD} - B(h) - 0,18$$

$$P2_{sup}(h) = P2_{inf}(h) + 0,36$$

avec, dans lesdites équations :

- $P_{VL1}$ et $P_{VL2}$ qui sont les puissances, hors éventuelle correction d'astigmatisme, éventuellement nécessaires à la vision de loin respectivement pour le premier oeil et pour le second oeil, exprimées en dioptries (D) ;
- $P_{ADD}$ qui est l'addition requise par le porteur pour la vision de près, exprimée en dioptries (D) ;
- h qui est la distance par rapport à l'axe optique, exprimée en millimètres (mm) ; et
- A (h) qui est égal à

$$\sum_{i=0}^{i=9} \alpha_{2i} \ h^{2i}$$

et B (h) qui est égal à

$$\sum_{i=0}^{i=9} \beta_{2i} \ h^{2i} \ ,$$

pour h compris entre 0,4 mm et 2,4 mm, la série de coefficients $\alpha_{2i}$ et la série de coefficients $\beta_{2i}$, pour i allant de 1 à 9, étant chacune définies par une respective des neuf listes SA, SB, SC, MA, MB, MC, LA, LB, LC de coefficients ci-dessous :

| i | SA | SB | SC |
|---|---|---|---|
| 0 | 1.398800E+00 | 3.093330E+00 | 4.605640E+00 |
| 1 | -2.160020E+00 | -4.751140E+00 | -5.235240E+00 |
| 2 | 1.337720E+00 | 2.913640E+00 | 2.458240E+00 |
| 3 | -4.327890E-01 | -9.378340E-01 | -6.301520E-01 |
| 4 | 8.154230E-02 | 1.764900E-01 | 9.787570E-02 |
| 5 | -9.410290E-03 | -2.038990E-02 | -9.616130E-03 |
| 6 | 6.736380E-04 | 1.462890E-03 | 6.012020E-04 |
| 7 | -2.914960E-05 | -6.347570E-05 | -2.318560E-05 |
| 8 | 6.978470E-07 | 1.520000E-06 | 5.030000E-07 |
| 9 | -7.091930E-09 | -1.550000E-08 | -4.690000E-09 |

| i | MA | MB | MC |
|---|---|---|---|
| 0 | 1.799020E+00 | 3.048790E+00 | 4.144890E+00 |
| 1 | -1.823880E+00 | -3.424400E+00 | -4.233760E+00 |
| 2 | 8.133470E-01 | 1.714210E+00 | 1.949870E+00 |
| 3 | -2.057150E-01 | -4.850380E-01 | -5.212190E-01 |
| 4 | 3.222470E-02 | 8.400400E-02 | 8.739800E-02 |
| 5 | -3.231690E-03 | -9.184070E-03 | -9.410210E-03 |
| 6 | 2.075120E-04 | 6.343800E-04 | 6.468110E-04 |
| 7 | -8.241900E-06 | -2.679260E-05 | -2.734250E-05 |
| 8 | 1.842050E-07 | 6.310000E-07 | 6.460000E-07 |
| 9 | - 1.770040E-09 | -6.330000E-09 | -6.520000E-09 |

| i | LA | LB | LC |
|---|---|---|---|
| 0 | 1.258120E+00 | 2.3409009E+00 | 2.660000E+00 |
| 1 | 2.766510E-01 | -1.6016233E+00 | -3.029760E+00 |
| 2 | -5.863900E-01 | 8.5580090E-01 | 1.837520E+00 |
| 3 | 2.158210E-01 | -4.0855924E-01 | -6.361990E-01 |
| 4 | -3.890640E-02 | 1.2233248E-01 | 1.293960E-01 |
| 5 | 4.063430E-03 | -2.1406740E-02 | -1.595350E-02 |
| 6 | -2.578890E-04 | 2.2148862E-03 | 1.205290E-03 |
| 7 | 9.821560E-06 | -1.3380186E-04 | -5.450000E-05 |
| 8 | -2.065710E-07 | 4.3658573E-06 | 1.350000E-06 |
| 9 | 1.845210E-09 | -5.9468409E-08 | -1.410000E-08 |
| (E et le nombre qui le suit représentent l'exposant en puissance de 10). | | | |

Dans un premier mode de réalisation préféré, lesdites fonctions A (h) et B (h) sont identiques, les coefficients $\alpha_{2i}$ et $\beta_{2i}$ étant pris dans une même dite liste.

Dans un deuxième mode de réalisation préféré, lesdites fonctions A (h) et B (h) sont différentes, les coefficients $\alpha_{2i}$ et $\beta_{2i}$ étant pris dans deux dites listes distinctes.

Selon d'autres caractéristiques préférées, la portion correctrice d'au moins une desdites première lentille et seconde lentille corrige également l'astigmatisme.

L'invention vise également, sous un deuxième aspect, une gamme de lentilles ophtalmiques à vision simultanée progressive, caractérisée en ce qu'elle comporte une série de lentilles d'un premier type et une série de lentilles d'un second type en vue de permettre la constitution d'un jeu de deux lentilles ophtalmiques tel qu'exposé ci-dessus, pour corriger la vision d'un porteur presbyte avec une première lentille pour la correction d'un premier oeil dudit porteur qui est prise dans ladite série de lentilles d'un premier type et une seconde lentille pour la correction du second oeil dudit porteur qui est prise dans ladite série de lentilles d'un second type, dans laquelle :

- chaque lentille de ladite série de lentilles de premier type et de ladite série de lentilles de second type comporte une portion correctrice dont la puissance, hors éventuelle correction d'astigmatisme, varie, en fonction de la distance par rapport à l'axe optique, suivant un profil progressif respectif s'inscrivant dans une zone comprise entre une courbe enveloppe inférieure et une courbe enveloppe supérieure répondant chacune à une expression polynomiale respective prédéterminée, les profils respectifs des lentilles de la série de lentilles de premier type étant en correspondance les uns des autres par translation selon un pas de puissance prédéterminé, et de même pour la série de lentilles de deuxième type ;
- pour chaque lentille de ladite série de lentilles de premier type, le profil progressif suivant lequel la puissance, hors éventuelle correction d'astigmatisme, varie, en fonction de la distance par rapport à l'axe optique, est tel que cette puissance est plus importante à 0,4 mm qu'à 2 mm de distance par rapport à l'axe optique et tel que cette puissance, entre 2 mm et 2,4 mm de distance par rapport à l'axe optique, ne varie pas de plus de 0,5 dioptrie ; et
- pour chaque lentille de ladite série de lentilles de second type, le profil progressif suivant lequel la puissance, hors éventuelle correction d'astigmatisme, varie, en fonction de la distance par rapport à l'axe optique, est tel que cette puissance est moins importante à 0,4 mm qu'à 2 mm de distance par rapport à l'axe optique et tel que cette puissance, entre 2 mm et 2,4 mm de distance par rapport à l'axe optique, ne varie pas de plus de 0,5 dioptrie.

Selon des caractéristiques spécifiques préférées de la gamme selon l'invention :

- pour chaque lentille de ladite série de lentilles de premier type, le profil progressif suivant lequel la puissance, hors éventuelle correction d'astigmatisme, varie en fonction de la distance par rapport à l'axe optique, s'inscrit entre une courbe enveloppe inférieure et une courbe enveloppe supérieure, répondant respectivement aux équations suivantes :

$$P1_{inf}(h) = P_n + A(h) - 0{,}18$$

$$P1_{sup}(h) = P_{inf}(h) + 0{,}36$$

- pour chaque lentille de ladite série de lentilles de second type, le profil progressif suivant lequel la puissance, hors éventuelle correction d'astigmatisme, varie, en fonction de la distance par rapport à l'axe optique, s'inscrit entre une courbe enveloppe inférieure et une courbe enveloppe supérieure répondant respectivement aux équations suivantes :

$$P2_{inf}(h) = P_m - B(h) - 0{,}18$$

$$P2_{sup}(h) = P2_{inf}(h) + 0{,}36$$

avec, dans lesdites équations :

- $P_n$ qui est une puissance, exprimée en dioptries (D), qui change d'une lentille à l'autre de ladite série de lentilles de premier type, suivant ledit pas prédéterminé ;
- $P_m$ qui est une puissance, exprimée en dioptries (D), qui change d'une lentille à l'autre de ladite série de lentilles de deuxième type, suivant ledit pas prédéterminé ;
- h qui est la distance par rapport à l'axe optique, exprimée en millimètres (mm) ; et
- A (h) qui est égal à

$$\sum_{i=0}^{i=9} \alpha_{2i}\ h^{2i}$$

et B (h) qui est égal à

$$\sum_{i=0}^{i=9} \beta_{2i}\ h^{2i}\ ,$$

pour h compris entre 0,4 mm et 2,4 mm, la série de coefficients $\alpha_{2i}$ et la série de coefficients $\beta_{2i}$, pour i allant de 1 à 9, étant chacune définies par une respective des 9 listes SA, SB, SC, MA, MB, MC, LA, LB, LC de coefficients exposés ci-dessus.

L'invention vise enfin, sous un troisième aspect, un procédé pour obtenir un jeu de deux lentilles ophtalmiques à vision simultanée progressive, tel qu'exposé ci-dessus, pour corriger la vision d'un porteur presbyte, caractérisé en ce qu'il comporte les étapes suivantes :

a) une étape de détermination de l'addition nécessaire audit porteur et, pour chacun des deux yeux dudit porteur, de la puissance respective nécessaire pour corriger son éventuelle myopie ou hypermétropie ;
b) une étape de détermination, parmi les deux yeux dudit porteur, de celui, dit second oeil, qui offre la meilleure tolérance à une défocalisation myopique, c'est-à-dire au flou introduit par une lentille ayant une puissance positive ;
c) une étape de sélection, dans la gamme de lentilles telle qu'exposée ci-dessus, de la lentille de la série de lentilles de premier type dont la puissance $P_n$ est égale à la puissance nécessaire pour corriger l'éventuelle myopie ou hypermétropie du premier oeil dudit porteur ;
d) une étape de sélection, dans ladite gamme, de la lentille de la série de lentilles de second type dont la puissance $P_m$ est égale à la somme de la puissance nécessaire pour corriger l'éventuelle myopie ou hypermétropie du second oeil du porteur et de l'addition dudit porteur.

On notera que la mise en oeuvre de l'étape b), offre l'avantage de minimiser l'éventuelle gêne que le porteur pourrait ressentir du fait que la seconde lentille présente en périphérie une puissance correspondant à la puissance nécessaire pour corriger son éventuelle myopie ou hypermétropie à laquelle s'ajoute l'addition requise pour corriger sa presbytie.

Selon d'autres caractéristiques préférées, pour procurer au porteur une vision aussi bonne que possible, le procédé selon l'invention comporte en outre les étapes d'optimisation suivantes :

- une étape de recherche, en vision de loin, de la lentille de la série de lentilles de premier type dont la puissance $P_n$ est la plus grande possible acceptée par le porteur ;
- une étape de recherche, en vision de près, de la lentille de la série de lentilles de second type dont la puissance $P_m$ est la plus petite possible acceptée par le porteur ; et
- éventuellement, une répétition alternative des deux étapes précédentes jusqu'à l'obtention du meilleur compromis.

De préférence, lesdites étapes d'optimisation sont conduites en vision binoculaire.

L'exposé de l'invention sera maintenant poursuivi par la description d'exemples préférés de réalisation, donnée ci-après, à titre illustratif et non limitatif, en référence aux dessins annexés. Sur ceux-ci :

- la figure 1 illustre de façon schématique une gamme de lentilles ophtalmiques conforme à l'invention ;
- la figure 2 est une vue de face d'un jeu de deux lentilles ophtalmiques conforme à l'invention ;
- la figure 3 est une vue partielle schématique en coupe axiale prise dans l'une de ces lentilles ;
- les figures 4 et 5 sont des diagrammes représentatifs de la puissance respectivement de l'une et de l'autre des lentilles de ce jeu, en fonction de la distance par rapport à l'axe optique ;
- les figures 6 et 7 sont des diagrammes similaires aux figures 4 et 5, pour une variante de réalisation du jeu de deux lentilles, dans lequel les lentilles ont des profils qui suivent des profils-type différents ; et
- les figures 8 à 14 sont des diagrammes montrant différents exemples de profils-type possibles pour la mise en oeuvre de l'invention, chaque diagramme montrant plus précisément les courbes enveloppes entre lesquelles doit s'inscrire le profil-type.

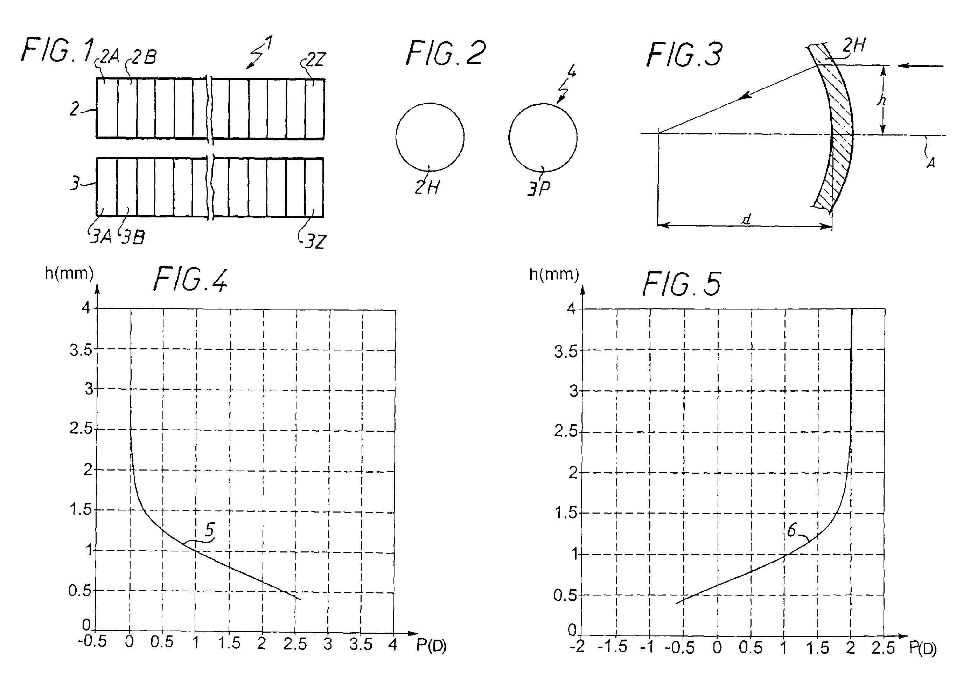

La gamme 1 de lentilles ophtalmiques illustrée sur la figure 1 comporte une série 2 de lentilles 2A, 2B, ..., 2Z de lentilles d'un premier type et une série 3 de lentilles 3A, 3B, ..., 3Z de lentilles d'un second type.

La gamme 1 permet la constitution d'un jeu de deux lentilles ophtalmiques pour corriger la vision d'un porteur presbyte, tel que le jeu 4 montré sur la figure 2, qui comporte une lentille 2H prise dans la série 2 de lentilles de premier type, pour corriger un premier oeil du porteur, ici l'oeil gauche, et une lentille 3P, prise dans la série 3 de lentilles de second type, pour corriger le second oeil du porteur, ici l'oeil droit.

Chacune des lentilles de la gamme 1, et donc la lentille 2H montrée sur la figure 3, présente une symétrie de révolution autour d'un axe optique A et comporte une portion correctrice située entre l'axe A et 4 mm de distance par rapport à cet axe.

Schématiquement, la lentille 2H illustrée étant convergente, tout rayon lumineux incident qui, parallèle à l'axe A, s'étend à une distance h de cet axe, recoupe cet axe A en un point situé à une distance d de la lentille 2H après la traversée de celle-ci.

La puissance P, exprimée en dioptrie (D) est définie schématiquement comme l'inverse de la distance d, exprimée en mètre.

Plus précisément, la puissance P se définit, au sens du présent mémoire, comme la puissance sagittale P $(h) = \frac{1}{h}\frac{d(\delta(h))}{dh}$, avec $\delta$ (h) qui est la différence de chemin optique introduite par la lentille sur un rayon lumineux parallèle à l'axe optique et situé à une distance h par rapport à celui-ci, reliée au déphasage introduit par la lentille par l'équation $\varphi(h) = \frac{2\pi\delta(h)}{\lambda}$, où $\varphi$ (h) est le déphasage à la distance h et où $\lambda$ est la longueur d'onde du rayon lumineux, les valeurs négatives de $\delta$ et de $\varphi$ correspondant à un retard introduit sur l'onde optique et les valeurs positives à une avance, P étant par exemple exprimé en dioptrie (D), h en millimètre (mm), $\delta$ et $\lambda$ en micromètre ($\mu$m) et $\varphi$ en radian (rad).

En pratique $\varphi$ (h) peut être déterminé par interférométrie ou par une autre méthode de mesure de déphasage optique.

Chaque lentille de la gamme 1 est du type à vision simultanée progressive, de sorte que la puissance de chacune de ces lentilles varie de manière douce entre le centre et la périphérie de la zone optique.

Plus précisément, chaque lentille de la gamme 1 suit un profil-type progressif entre le cercle de rayon h = 0,4 mm et le cercle de rayon h = 2,4 mm.

On notera que quand l'éclairage est bon et que la lentille est parfaitement centrée, les rayons lumineux passant au travers de la pupille traversent la lentille dans une zone située entre l'axe optique A et un cercle de rayon h = 2,4 mm, alors que quand ces conditions ne sont pas remplies, des rayons traversant la lentille dans la zone située entre h = 2,4 mm et le bord de la zone correctrice passent également au travers de la pupille.

Dans les exemples préférés décrits et représentés, la puissance reste constante entre les cercles h = 2,4 mm et h = 4 mm, mais il est possible en variante de faire varier la puissance dans cette zone.

On notera également qu'en raison des difficultés pratiques de fabrication et de mesure, les valeurs de puissance pour la zone située entre l'axe A et le cercle de rayon h = 0,4 mm, ce qui représente une très faible proportion (quelques %) de l'aire de la pupille, ne sont pas significatives, de sorte que ces valeurs de puissance ne sont pas mentionnées ou représentées dans le présent mémoire et dans les dessins qui l'accompagnent.

Comme on le voit sur la figure 4, le profil progressif 5 suivant lequel la puissance de la lentille 2H varie en fonction de h est tel que cette puissance reste nulle (absence de correction) entre h = 4 mm et h = 2,4 mm, puis que la puissance augmente progressivement entre h = 2,4 mm et h = 0,4 mm, la puissance étant d'environ 2,6 dioptries sur le cercle h = 0,4 mm.

Le profil 6 de la lentille 3P, illustré sur la figure 5, est quant à lui tel que la puissance reste constante entre les cercles de rayon h = 4 mm et h = 2,4 mm, puis cette puissance décroît progressivement jusqu'à atteindre environ - 0,6 dioptrie sur le cercle h = 0,4 mm.

On observera que le profil 6 correspond à l'image miroir du profil 5, décalé de + 2 dioptries. En d'autres termes, le profil 6, exprimé sous la forme d'une fonction g (h), se déduit du profil 5 exprimé sous la forme d'une fonction f (h) par l'équation g (h) = 2 - f (h).

Le jeu 4 est prévu pour corriger la vision d'un porteur presbyte qui requière une addition de 2 dioptries et qui n'est ni myope, ni hypermétrope, ni astigmate.

On voit que la lentille 2H ne procure aucune correction ou quasiment aucune correction à l'oeil gauche du porteur dans la zone périphérique de la portion correctrice, située au-delà de h = 2 mm, tandis que la lentille 3P procure à l'oeil droit, dans la zone périphérique de la portion correctrice, une correction constante ou à peu près, de + 2 dioptries, c'est-à-dire de la valeur requise pour corriger la presbytie, de sorte que la lentille 2H est à correction de vision de près centrale perturbant peu la vision de loin tandis que la lentille 3P est à correction de vision de loin centrale perturbant peu la vision de près.

Le porteur équipé du jeu de deux lentilles 4 dispose ainsi d'une acuité visuelle satisfaisante à toutes les distances, c'est-à-dire aussi bien en vision de près, en vision intermédiaire, qu'en vision de loin, le caractère binoculaire de la vision étant lui aussi satisfaisant.

Pour obtenir le jeu 4 convenant au porteur, c'est-à-dire pour déterminer que, dans la gamme 1, ce sont les lentilles 2H et 3P qui conviennent au porteur, il a d'abord été mené un examen optométrique standard afin de déterminer, notamment par réfraction, la puissance nécessaire à la correction de l'éventuelle myopie ou hypermétropie de chaque oeil, ainsi que de l'addition nécessaire à ce porteur. Les résultats de cet examen ont été qu'aucune correction de myopie ou d'hypermétropie n'est requise, et que l'addition nécessaire est de 2 dioptries.

Il a également été recherché celui des deux yeux qui offre la meilleure tolérance à une défocalisation myopique, c'est-à-dire au flou introduit par une lentille ayant une puissance positive. Il s'est avéré que c'est l'oeil droit qui offre cette meilleure tolérance.

On a alors sélectionné, dans la série 3, dont chaque lentille présente un profil progressif se déduisant d'un profil-type prévu pour l'oeil ayant la meilleure tolérance à la défocalisation myopique, la lentille 3P, qui correspond à une puissance nominale de 2 dioptries, c'est-à-dire à la somme de la puissance nécessaire à la correction de la myopie ou de l'hypermétropie, qui est ici nulle, et de l'addition requise par le porteur, c'est-à-dire 2 dioptries.

Il a également été sélectionné, dans la série 2, dont les lentilles présentent un profil correspondant à un profil-type prévu pour l'oeil n'ayant pas la meilleure tolérance à une défocalisation myopique, la lentille 2H, qui présente une puissance nominale de 0 dioptrie, aucune correction de myopie ou d'hypermétropie n'étant nécessaire pour l'oeil gauche.

Une fois ces lentilles choisies et posées sur les yeux du porteur, il a été mené, en vision binoculaire, les étapes d'optimisation consistant à rechercher, avec des verres d'essai, pour l'oeil gauche (oeil offrant la moins bonne tolérance à une défocalisation myopique), quelle était la puissance la plus grande possible acceptée en vision de loin par le porteur, tandis que pour l'oeil droit (meilleure tolérance à une défocalisation myopique), il a été recherché la puissance la plus petite possible en vision de près acceptée par le porteur. Ces ajustements, faits alternativement, ont finalement montré que le meilleur compromis était celui de conserver les puissances nominales de 0 dioptrie pour l'oeil gauche et de + 2 dioptries pour l'oeil droit.

On va maintenant donner deux autres exemples, pour bien faire comprendre comment l'on détermine, dans la gamme 1, les lentilles nécessaires pour corriger la presbytie ainsi que l'éventuelle myopie ou hypermétropie de la quasi-totalité des porteurs presbytes, la série de lentilles 2 (oeil offrant la moins bonne tolérance à une défocalisation myopique) comportant des lentilles dont la puissance nominale va de - 20,00 à + 20,00 dioptries par pas de 0,25 dioptrie tandis que la série de lentilles 3 (meilleure tolérance à une défocalisation myopique) offre une puissance allant de - 19,00 à + 23,00 dioptries par pas de 0,25 dioptrie.

Dans le premier de ces deux autres exemples, il s'agit d'un porteur relativement âgé et atteint d'une forte myopie, l'examen optométrique montrant la nécessité d'une correction de - 9,00 dioptries pour l'oeil gauche et de - 11,00 dioptries pour l'oeil droit, et que l'addition nécessaire à ce porteur est de 3 dioptries.

L'examen sur la tolérance à une défocalisation myopique a fait quant à lui apparaître que c'est l'oeil droit qui offre la meilleure tolérance.

Il a donc été choisi, dans la série 2, pour l'oeil gauche, la lentille de puissance nominale - 9,00 dioptries tandis qu'il a été choisi dans la série 3, pour l'oeil droit, la lentille ayant la puissance nominale - 11,00 + 3,00, soit - 8,00 dioptries, les lentilles correspondantes étant posées sur les yeux du patient avant d'effectuer, avec des verres, les étapes d'optimisation susmentionnées.

Dans le second exemple supplémentaire, il s'agit d'un porteur hypermétrope, relativement jeune, pour lequel l'examen optométrique a déterminé que la puissance nécessaire pour corriger l'hypermétropie est de + 3 dioptries pour l'oeil droit et de + 5 dioptries pour l'oeil gauche, ce porteur nécessitant une addition de + 1,25 dioptrie.

L'examen sur la tolérance à une défocalisation myopique ayant déterminé que l'oeil le plus tolérant est l'oeil gauche, il est choisi, pour cet oeil, dans la série de lentilles 3, celle qui présente une puissance nominale de + 5,00 + 1,25 soit 6,25 dioptries tandis que pour l'oeil droit, il est choisi dans la série de lentilles 2, celle qui présente une puissance nominale de + 3,00 dioptries.

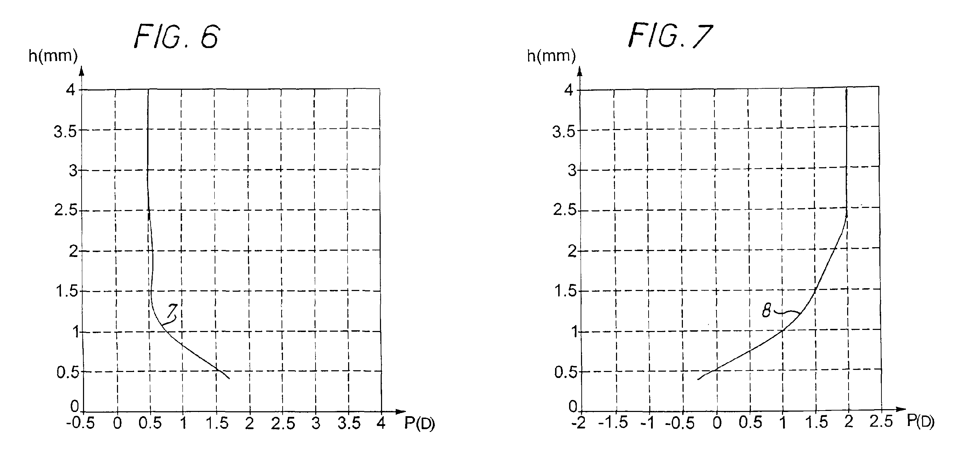

On va maintenant décrire, à l'appui des figures 6 et 7, une variante de la gamme 1, dans laquelle le profil-type utilisé pour les lentilles d'une série n'est pas l'image miroir du profil-type utilisé pour l'autre série.

Les deux lentilles ayant respectivement le profil progressif 7 illustré sur la figure 6 et le profil progressif 8 illustré sur la figure 7, sont respectivement prévues pour l'oeil gauche et l'oeil droit, l'examen ayant montré que ce dernier oeil est celui qui offre la meilleure tolérance à une défocalisation myopique tandis que l'examen optométrique a permis de déterminer que l'oeil gauche est légèrement hypermétropie et nécessite une correction de 0,5 dioptrie tandis que l'oeil droit ne nécessite pas de correction, l'addition requise par ce porteur étant de 2 dioptries.

On voit que la façon dont le profil 7 varie entre les cercles de rayon h = 2,4 mm et h = 0,4 mm, est très différente de la façon dont varie la partie correspondante du profil 8, et qu'en particulier l'amplitude de variation est d'environ 1,2 dioptrie pour le profil 7 tandis qu'il est d'environ 2,3 dioptries pour le profil 8 ; et que la variation de puissance est relativement faible pour le profil 7 entre les cercles h = 2,4 mm et h = 1,4 mm alors que pour le profil 8, la puissance varie d'environ 0,6 dioptrie sur la même zone.

D'une façon générale, les essais qui ont été menés ont permis de déterminer que les profils exposés ci-après offrent des résultats tout à fait satisfaisants :

- pour chaque lentille de l'une des séries de la gamme, par exemple la série 2 de la gamme 1, le profil progressif suivant lequel la puissance varie en fonction de h, s'inscrit entre une courbe enveloppe inférieure et une courbe enveloppe supérieure, répondant respectivement aux équations :

$$P1_{inf}(h) = P_n + A(h) - 0,18$$

$$P1_{sup}(h) = P_{inf}(h) + 0,36$$

- pour chaque lentille de l'autre série de lentilles de la gamme, par exemple la série 3 de la gamme 1, le profil progressif suivant lequel la puissance varie en fonction de h, s'inscrit entre une courbe enveloppe inférieure et une courbe enveloppe supérieure répondant respectivement aux équations suivantes :

$$P2_{inf}(h) = P_m - B(h) - 0,18$$

$$P2_{sup}(h) = P2_{inf}(h) + 0,36$$

avec, dans lesdites équations :

- $P_n$ qui est une puissance, exprimée en dioptries (D), qui change d'une lentille à l'autre de la première série de lentilles, suivant un pas prédéterminé ;
- $P_m$ qui est une puissance, exprimée en dioptries (D), qui change d'une lentille à l'autre de la seconde série de lentilles, suivant un pas prédéterminé ; et
- A (h) qui est égal à

$$\sum_{i=0}^{i=9} \alpha_{2i}\ h^{2i}$$

et B (h) qui est égal à

$$\sum_{i=0}^{i=9} \beta_{2i}\ h^{2i}\ ,$$

pour h compris entre 0,4 mm et 2,4 mm, la série de coefficients $\alpha_{2i}$ et la série de coefficients $\beta_{2i}$, pour i allant de 1 à 9, étant chacune définies par une respective des 9 listes SA, SB, SC, MA, MB, MC, LA, LB, LC de coefficients ci-dessous :

| i | SA | SB | SC |
|---|----|----|----|
| 0 | 1.398800E+00 | 3.093330E+00 | 4.605640E+00 |
| 1 | -2.160020E+00 | -4.751140E+00 | -5.235240E+00 |
| 2 | 1.337720E+00 | 2.913640E+00 | 2.458240E+00 |
| 3 | -4.327890E-01 | -9.378340E-01 | -6.301520E-01 |
| 4 | 8.154230E-02 | 1.764900E-01 | 9.787570E-02 |
| 5 | -9.410290E-03 | -2.038990E-02 | -9.616130E-03 |
| 6 | 6.736380E-04 | 1.462890E-03 | 6.012020E-04 |
| 7 | -2.914960E-05 | -6.347570E-05 | -2.318560E-05 |
| 8 | 6.978470E-07 | 1.520000E-06 | 5.030000E-07 |
| 9 | -7.091930E-09 | -1.550000E-08 | -4.690000E-09 |

| i | MA | MB | MC |
|---|----|----|----|
| 0 | 1.799020E+00 | 3.048790E+00 | 4.144890E+00 |
| 1 | -1.823880E+00 | -3.424400E+00 | -4.233760E+00 |
| 2 | 8.133470E-01 | 1.714210E+00 | 1.949870E+00 |
| 3 | -2.057150E-01 | -4.850380E-01 | -5.212190E-01 |

(suite)

| i | MA | MB | MC |
|---|---|---|---|
| 4 | 3.222470E-02 | 8.400400E-02 | 8.739800E-02 |
| 5 | -3.231690E-03 | -9.184070E-03 | -9.410210E-03 |
| 6 | 2.075120E-04 | 6.343800E-04 | 6.468110E-04 |
| 7 | -8.241900E-06 | -2.679260E-05 | -2.734250E-05 |
| 8 | 1.842050E-07 | 6.310000E-07 | 6.460000E-07 |
| 9 | -1.770040E-09 | -6.330000E-09 | -6.520000E-09 |

| i | LA | LB | LC |
|---|---|---|---|
| 0 | 1.258120E+00 | 2.3409009E+00 | 2.660000E+00 |
| 1 | 2.766510E-01 | -1.6016233E+00 | -3.029760E+00 |
| 2 | -5.863900E-01 | 8.5580090E-01 | 1.837520E+00 |
| 3 | 2.158210E-01 | -4.0855924E-01 | -6.361990E-01 |
| 4 | -3.890640E-02 | 1.2233248E-01 | 1.293960E-01 |
| 5 | 4.063430E-03 | -2.1406740E-02 | -1.595350E-02 |
| 6 | -2.578890E-04 | 2.2148862E-03 | 1.205290E-03 |
| 7 | 9.821560E-06 | -1.3380186E-04 | -5.450000E-05 |
| 8 | -2.065710E-07 | 4.3658573E-06 | 1.350000E-06 |
| 9 | 1.845210E-09 | -5.9468409E-08 | -1.410000E-08 |

(E et le nombre qui le suit représentent l'exposant en puissance de 10).

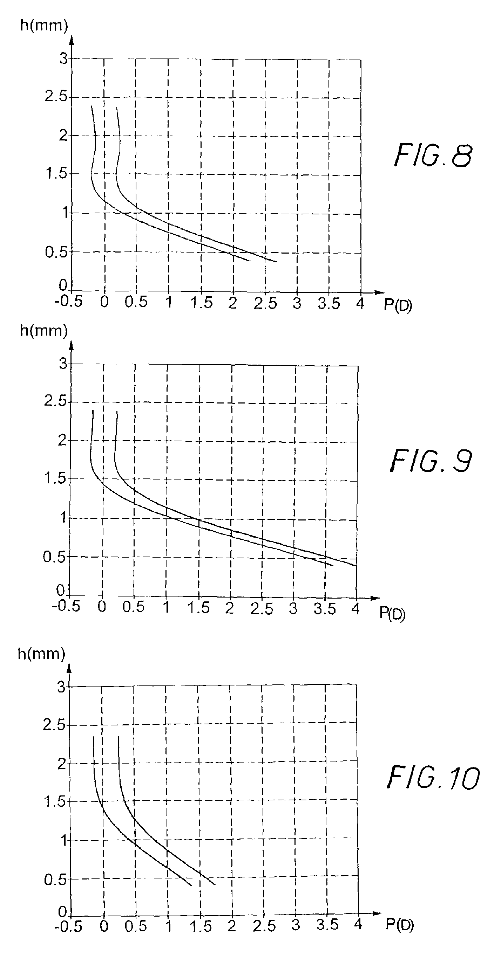

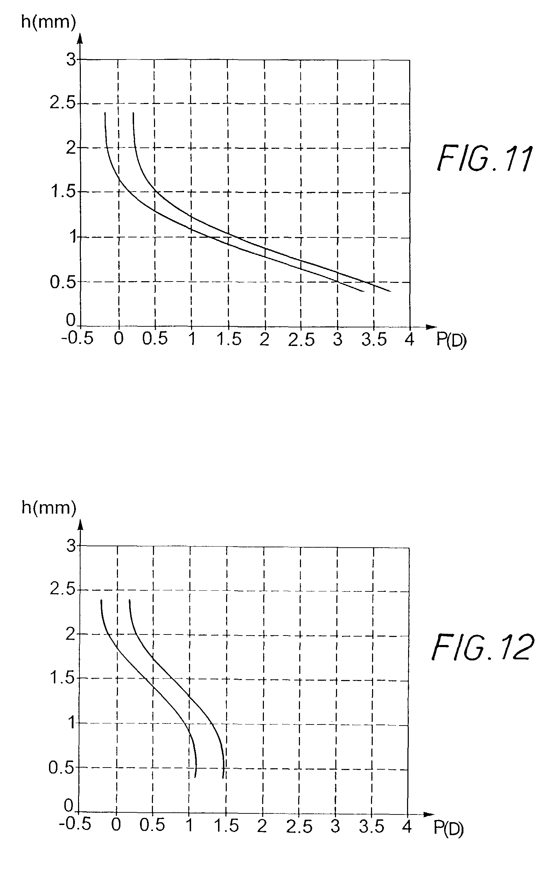

Les figures 8 à 14 montrent respectivement la courbe enveloppe inférieure et la courbe enveloppe supérieure des profils-type, c'est-à-dire $P1_{inf}$ (h) et $P1_{sup}$ (h) avec $P_n$ qui est égal à 0 et h qui varie de 0,4 mm à 2, 4 mm.

Plus précisément, les figures 8 à 14 illustrent respectivement les profils correspondants aux tables de coefficients SB, SC, MA, MC, LA, LB et LC.

On notera que les profils 5 et 6 montrés sur les figures 4 et 5 correspondent au profil-type donné par la table de coefficients MB tandis que les profils 7 et 8 montrés sur les figures 6 et 7 correspondent respectivement aux profils-type donnés par les tables de coefficients SA et LC.

Bien entendu, la première série de lentilles est prévue pour l'oeil ayant la moins bonne tolérance à une défocalisation myopique tandis que la seconde série de lentilles est prévue pour l'autre oeil, $P_n$ étant la puissance nécessaire à la correction de l'éventuelles myopie ou hypermétropie de l'oeil ayant la moins bonne tolérance à une défocalisation myopique tandis que $P_m$ est la somme de la puissance éventuellement nécessaire à la correction de l'éventuelle myopie ou hypermétropie de l'oeil ayant la meilleure tolérance à une défocalisation myopique et de l'addition requise par le porteur.

On notera qu'à ce jour les meilleures combinaisons semblent être les suivantes :

| | 1 | 2 | 3 | 4 |
|---|---|---|---|---|
| Liste de coefficients pour l'œil le moins tolérant à une défocalisation myopique | MA | LC | LB | MA |
| Liste de coefficients pour l'autre oeil | LC | LC | LB | MA |

et que parmi ces quatre combinaisons, la plus performante semble être la combinaison 3.

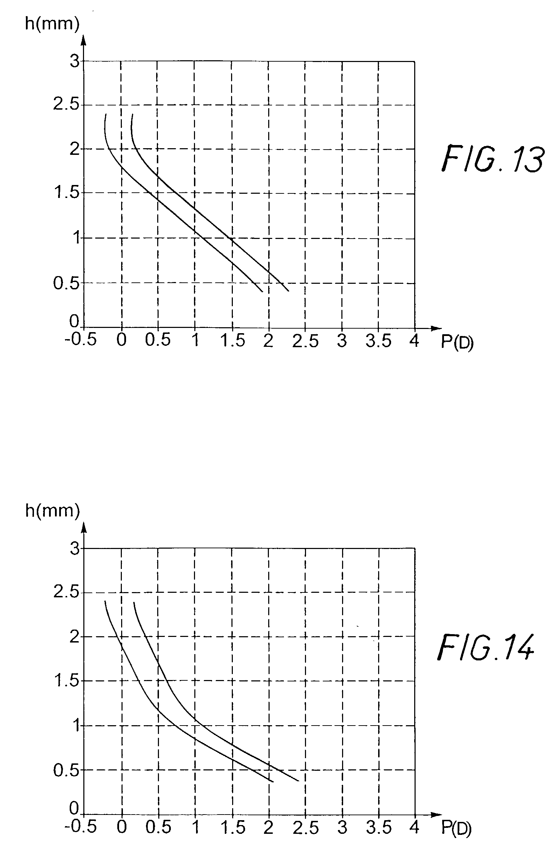

On observa que pour chaque profil-type la puissance, au-delà de h = 2 mm, ne varie pas de plus de 0,5 dioptrie, la plus forte progression étant montrée sur la figure 14 (table de coefficients LC) ; que la pente de puissance, à h = 1 mm, reste inférieure à 5 dioptries par millimètre ; tandis qu'à h = 2 mm, elle reste inférieure à 1 dioptrie par millimètre.

Dans une variante non représentée, les lentilles telles que décrites ci-dessus corrigent non seulement la presbytie et éventuellement la myopie ou hypermétropie, mais aussi l'astigmatisme, grâce à la présence d'une correction ayant des caractéristiques toriques.

Plus généralement, de nombreuses variantes sont possibles en fonction des circonstances, et on rappelle à cet égard que l'invention ne se limite pas aux exemples décrits et représentés.

## Revendications

1. Jeu de deux lentilles ophtalmiques à vision simultanée progressive pour corriger la vision d'un porteur presbyte, comportant une première lentille pour la correction d'un premier oeil dudit porteur et une seconde lentille pour la correction de son second oeil, chacune desdites première lentille et seconde lentille comportant une portion correctrice dont la puissance, hors éventuelle correction d'astigmatisme, varie, en fonction de la distance par rapport à l'axe optique, suivant un profil progressif respectif s'inscrivant dans une zone comprise entre une courbe enveloppe inférieure et une courbe enveloppe supérieure répondant chacune à une expression polynomiale respective prédéterminée ; caractérisé en ce que :

   - pour ladite première lentille (2H), le profil progressif (5) suivant lequel la puissance, hors éventuelle correction d'astigmatisme, varie, en fonction de la distance (h) par rapport à l'axe optique (A), est tel que cette puissance est plus importante à 0,4 mm qu'à 2 mm de distance par rapport à l'axe optique (A) et tel que cette puissance, entre 2 mm et 2,4 mm de distance par rapport à l'axe optique (A), ne varie pas de plus de 0,5 dioptrie; et
   - pour ladite seconde lentille (3P), le profil progressif suivant lequel la puissance, hors éventuelle correction d'astigmatisme, varie, en fonction de la distance (h) par rapport à l'axe optique (A), est tel que cette puissance est moins importante à 0,4 mm qu'à 2 mm de distance par rapport à l'axe optique (A) et tel que cette puissance, entre 2 mm et 2,4 mm de distance par rapport à l'axe optique (A), ne varie pas de plus de 0,5 dioptrie.

2. Jeu selon la revendication 1, caractérisé en ce que, pour chacune desdites première lentille (2H) et seconde lentille (3P), la différence de puissance, entre 0,4 mm et 2,4 mm de distance par rapport à l'axe optique (A), est, hors éventuelle correction d'astigmatisme, d'au moins une dioptrie en valeur absolue.

3. Jeu selon l'une quelconque des revendications 1 ou 2, caractérisé en ce que, pour chacune desdites première lentille (2H) et seconde lentille (3P), la puissance, hors éventuelle correction d'astigmatisme, varie, à 1 mm de l'axe optique, d'au plus 5 dioptries par millimètre.

4. Jeu selon l'une quelconque des revendications 1 à 3, caractérisé en ce que, pour chacune desdites première lentille (2H) et seconde lentille (3P), la puissance, hors éventuelle correction d'astigmatisme, varie, à 2 mm de l'axe optique, d'au plus 1 dioptrie par millimètre.

5. Jeu selon l'une quelconque des revendication 1 à 4, caractérisé en ce que :

   - pour ladite première lentille (2H), le profil progressif (5) suivant lequel la puissance, hors éventuelle correction d'astigmatisme, varie, en fonction de la distance (h) par rapport à l'axe optique, s'inscrit entre une courbe enveloppe inférieure et une courbe enveloppe supérieure, répondant respectivement aux équations suivantes :

$$P1_{inf}(h) = P_{VL1} + A(h) - 0,18$$

$$P1_{sup}(h) = P_{inf}(h) + 0,36$$

   - pour ladite seconde lentille (3P), le profil progressif (6) suivant lequel la puissance, hors éventuelle correction d'astigmatisme, varie, en fonction de la distance (h) par rapport à l'axe optique (A), s'inscrit entre une courbe enveloppe inférieure et une courbe enveloppe supérieure répondant respectivement aux équations suivantes :

$$P2_{inf}(h) = P_{VL2} + P_{ADD} - B(h) - 0,18$$

$$P2_{sup}(h) = P2_{inf}(h)+0,36$$

avec, dans lesdites équations :

- $P_{VL1}$ et $P_{VL2}$ qui sont les puissances, hors éventuelle correction d'astigmatisme, éventuellement nécessaires à la vision de loin respectivement pour le premier oeil et pour le second oeil, exprimées en dioptries (D) ;
- PADD qui est l'addition requise par le porteur pour la vision de près, exprimée en dioptries (D) ;
- h qui est la distance par rapport à l'axe optique, exprimée en millimètres (mm) ; et
- A (h) qui est égal à

$$\sum_{i=0}^{i=9} \alpha_{2i} \ h^{2i}$$

et B (h) qui est égal à

$$\sum_{i=0}^{i=9} \beta_{2i} \ h^{2i} \ ,$$

pour h compris entre 0,4 mm et 2,4 mm, la série de coefficients $\alpha_{2i}$ et la série de coefficients $\beta_{2i}$, pour i allant de 1 à 9, étant chacune définies par une respective des 9 listes SA, SB, SC, MA, MB, MC, LA, LB, LC de coefficients ci-dessous:

| i | SA | SB | SC |
|---|---|---|---|
| 0 | 1.398800E+00 | 3.093330E+00 | 4.605640E+00 |
| 1 | -2.160020E+00 | -4.751140E+00 | -5.235240E+00 |
| 2 | 1.337720E+00 | 2.913640E+00 | 2.458240E+00 |
| 3 | -4.327890E-01 | -9.378340E-01 | -6.301520E-01 |
| 4 | 8.154230E-02 | 1.764900E-01 | 9.787570E-02 |
| 5 | -9.410290E-03 | -2.038990E-02 | -9.616130E-03 |
| 6 | 6.736380E-04 | 1.462890E-03 | 6.012020E-04 |
| 7 | -2.914960E-05 | -6.347570E-05 | -2.318560E-05 |
| 8 | 6.978470E-07 | 1.520000E-06 | 5.030000E-07 |
| 9 | -7.091930E-09 | -1.550000E-08 | -4.690000E-09 |

| i | MA | MB | MC |
|---|---|---|---|
| 0 | 1.799020E+00 | 3.048790E+00 | 4.144890E+00 |
| 1 | -1.823880E+00 | -3.424400E+00 | -4.233760E+00 |
| 2 | 8.133470E-01 | 1.714210E+00 | 1.949870E+00 |
| 3 | -2.057150E-01 | -4.850380E-01 | -5.212190E-01 |
| 4 | 3.222470E-02 | 8.400400E-02 | 8.739800E-02 |
| 5 | -3.231690E-03 | -9.184070E-03 | -9.410210E-03 |
| 6 | 2.075120E-04 | 6.343800E-04 | 6.468110E-04 |
| 7 | -8.241900E-06 | -2.679260E-05 | -2.734250E-05 |
| 8 | 1.842050E-07 | 6.310000E-07 | 6.460000E-07 |
| 9 | -1.770040E-09 | -6.330000E-09 | -6.520000E-09 |

| i | LA | LB | LC |
|---|---|---|---|
| 0 | 1.258120E+00 | 2.3409009E+00 | 2.660000E+00 |
| 1 | 2.766510E-01 | -1.6016233E+00 | -3.029760E+00 |
| 2 | -5.863900E-01 | 8.5580090E-01 | 1.837520E+00 |
| 3 | 2.158210E-01 | -4.0855924E-01 | -6.361990E-01 |
| 4 | -3.890640E-02 | 1.2233248E-01 | 1.293960E-01 |
| 5 | 4.063430E-03 | -2.1406740E-02 | -1.595350E-02 |
| 6 | -2.578890E-04 | 2.2148862E-03 | 1.205290E-03 |
| 7 | 9.821560E-06 | -1.3380186E-04 | -5.450000E-05 |
| 8 | -2.065710E-07 | 4.3658573E-06 | 1.350000E-06 |
| 9 | 1.845210E-09 | -5.9468409E-08 | -1.410000E-08 |

(E et le nombre qui le suit représentent l'exposant en puissance de 10).

**6.** Jeu selon la revendication 5, caractérisé en ce que lesdites fonctions A(h) et B(h) sont identiques, les coefficients $\alpha_{2i}$ et $\beta_{2i}$ étant pris dans une même dite liste.

**7.** Jeu selon la revendication 5, caractérisé en ce que lesdites fonctions A(h) et B(h) sont différentes, les coefficients $\alpha_{2i}$ et $\beta_{2i}$ étant pris dans deux dites listes distinctes.

**8.** Jeu selon l'une quelconque des revendications 1 à 7, caractérisé en ce que la portion correctrice d'au moins une desdites première lentille et seconde lentille corrige également l'astigmatisme.

**9.** Gamme de lentilles ophtalmiques à vision simultanée progressive,
caractérisée en ce qu'elle comporte une série (2) de lentilles (2A-2Z) d'un premier type et une série (3) de lentilles (3A-3Z) d'un second type en vue de permettre la constitution d'un jeu (4) de deux lentilles ophtalmiques selon l'une quelconque des revendications 1 à 8 pour corriger la vision d'un porteur presbyte avec une première lentille (2H) pour la correction d'un premier oeil dudit porteur qui est prise dans ladite série (2) de lentilles d'un premier type et une seconde lentille (3P) pour la correction du second oeil dudit porteur qui est prise dans ladite série (3) de lentilles d'un second type, dans laquelle :

- chaque lentille de ladite série de lentilles de premier type et de ladite série de lentilles de second type comporte une portion correctrice dont la puissance, hors éventuelle correction d'astigmatisme, varie, en fonction de la distance (h) par rapport à l'axe optique (A), suivant un profil progressif respectif s'inscrivant dans une zone comprise entre une courbe enveloppe inférieure et une courbe enveloppe supérieure répondant chacune à une expression polynomiale respective prédéterminée, les profils respectifs des lentilles de la série de lentilles de premier type étant en correspondance les uns des autres par translation selon un pas de puissance prédéterminé, et de même pour la série de lentilles de deuxième type ;
- pour chaque lentille de ladite série (2) de lentilles de premier type, le profil progressif (5 ; 7) suivant lequel la puissance, hors éventuelle correction d'astigmatisme, varie, en fonction de la distance (h) par rapport à l'axe optique (A), est tel que cette puissance est plus importante à 0,4 mm qu'à 2 mm de distance par rapport à l'axe optique (A) et tel que cette puissance, entre 2 mm et 2,4 mm de distance par rapport à l'axe optique (A), ne varie pas de plus de 0,5 dioptrie ; et
- pour chaque lentille de ladite série (3) de lentilles de second type, le profil progressif (6 ; 8) suivant lequel la puissance, hors éventuelle correction d'astigmatisme, varie, en fonction de la distance (h) par rapport à l'axe optique (A), est tel que cette puissance est moins importante à 0,4 mm qu'à 2 mm de distance par rapport à l'axe optique (A) et tel que cette puissance, entre 2 mm et 2,4 mm de distance par rapport à l'axe optique (A), ne varie pas de plus de 0,5 dioptrie.

**10.** Gamme selon la revendication 9, caractérisée en ce que, pour chaque lentille de ladite série (2) de lentilles de premier type et pour chaque lentille de ladite série (3) de lentilles de second type, la différence de puissance, entre 0,4 mm et 2,4 mm de distance par rapport à l'axe optique (A), est, hors correction éventuelle d'astigmatisme, d'au moins une dioptrie en valeur absolue.

**11.** Gamme selon l'une quelconque des revendications 9 ou 10, caractérisée en ce que, pour chaque lentille de ladite série (2) de lentilles de premier type et pour chaque lentille de ladite série (3) de lentilles de second type, la puissance, hors éventuelle correction d'astigmatisme, varie, à 1 mm de l'axe optique, d'au plus 5 dioptries par millimètre.

12. Gamme selon l'une quelconque des revendications 9 à 11, caractérisée en ce que, pour chaque lentille de ladite série (2) de lentilles de premier type et pour chaque lentille de ladite série (3) de lentilles de second type, la puissance, hors éventuelle correction d'astigmatisme, varie, à 2 mm de l'axe optique, d'au plus 1 dioptrie par millimètre.

13. Gamme selon l'une quelconque des revendications 9 à 12, caractérisé en ce que ledit pas prédéterminé est de 0,25 dioptrie.

14. Gamme selon l'une quelconque des revendications 9 à 13, caractérisée en ce qu'elle comporte au moins une lentille dont ladite portion correctrice corrige également l'astigmatisme.

15. Gamme selon l'un quelconque des revendications 9 à 14, caractérisée en que :

- pour chaque lentille de ladite série (2) de lentilles de premier type, le profil progressif suivant lequel la puissance, hors éventuelle correction d'astigmatisme, varie en fonction de la distance (h) par rapport à l'axe optique (A), s'inscrit entre une courbe enveloppe inférieure et une courbe enveloppe supérieure, répondant respectivement aux équations suivantes :

$$P1_{inf}(h) = P_n + A(h) - 0,18$$

$$P1_{sup}(h) = P_{inf}(h) + 0,36$$

- pour chaque lentille de ladite série (3) de lentilles de second type, le profil progressif suivant lequel la puissance, hors éventuelle correction d'astigmatisme, varie, en fonction de la distance (h) par rapport à l'axe optique (A), s'inscrit entre une courbe enveloppe inférieure et une courbe enveloppe supérieure répondant respectivement aux équations suivantes :

$$P2_{inf}(h) = P_m - B(h) - 0,1\,8$$

$$P2_{sup}(h) = P2_{inf}(h) + 0,36$$

avec, dans lesdites équations :

- $P_n$ qui est une puissance, exprimée en dioptries (D), qui change d'une lentille à l'autre de ladite série de lentilles de premier type, suivant ledit pas prédéterminé ;
- $P_m$ qui est une puissance, exprimée en dioptries (D), qui change d'une lentille à l'autre de ladite série de lentilles de deuxième type, suivant ledit pas prédéterminé ;
- h qui est la distance par rapport à l'axe optique, exprimée en millimètres (mm) ; et
- A (h) qui est égal à

$$\sum_{i=0}^{i=9} \alpha_{2i}\ h^{2i}$$

et B (h) qui est égal à

$$\sum_{i=0}^{i=9}\beta_{2i}\ h^{2i}\ ,$$

pour h compris entre 0,4 mm et 2,4 mm, la série de coefficients $\alpha_{2i}$ et la série de coefficients $\beta_{2i}$, pour i allant de 1 à 9, étant chacune définies par une respective des 9 listes SA, SB, SC, MA, MB, MC, LA, LB, LC de coefficients ci-dessous :

| i | SA | SB | SC |
|---|---|---|---|
| 0 | 1.398800E+00 | 3.093330E+00 | 4.605640E+00 |
| 1 | -2.160020E+00 | -4.751140E+00 | -5.235240E+00 |
| 2 | 1.337720E+00 | 2.913640E+00 | 2.458240E+00 |
| 3 | -4.327890E-01 | -9.378340E-01 | -6.301520E-01 |
| 4 | 8.154230E-02 | 1.764900E-01 | 9.787570E-02 |
| 5 | -9.410290E-03 | -2.038990E-02 | -9.616130E-03 |
| 6 | 6.736380E-04 | 1.462890E-03 | 6.012020E-04 |
| 7 | -2.914960E-05 | -6.347570E-05 | -2.318560E-05 |
| 8 | 6.978470E-07 | 1.520000E-06 | 5.030000E-07 |
| 9 | -7.091930E-09 | -1.550000E-08 | -4.690000E-09 |

| i | MA | MB | MC |
|---|---|---|---|
| 0 | 1.799020E+00 | 3.048790E+00 | 4.144890E+00 |
| 1 | -1.823880E+00 | -3.424400E+00 | -4.233760E+00 |
| 2 | 8.133470E-01 | 1.714210E+00 | 1.949870E+00 |
| 3 | -2.057150E-01 | -4.850380E-01 | -5.212190E-01 |
| 4 | 3.222470E-02 | 8.400400E-02 | 8.739800E-02 |
| 5 | -3.231690E-03 | -9.184070E-03 | -9.410210E-03 |
| 6 | 2.075120E-04 | 6.343800E-04 | 6.468110E-04 |
| 7 | -8.241900E-06 | -2.679260E-05 | -2.734250E-05 |
| 8 | 1.842050E-07 | 6.310000E-07 | 6.460000E-07 |
| 9 | -1.770040E-09 | -6.330000E-09 | -6.520000E-09 |

| i | LA | LB | LC |
|---|---|---|---|
| 0 | 1.258120E+00 | 2.3409009E+00 | 2.660000E+00 |
| 1 | 2.766510E-01 | -1.6016233E+00 | -3.029760E+00 |
| 2 | -5.863900E-01 | 8.5580090E-01 | 1.837520E+00 |
| 3 | 2.158210E-01 | -4.0855924E-01 | -6.361990E-01 |
| 4 | -3.890640E-02 | 1.2233248E-01 | 1.293960E-01 |
| 5 | 4.063430E-03 | -2.1406740E-02 | -1.595350E-02 |
| 6 | -2.578890E-04 | 2.2148862E-03 | 1.205290E-03 |
| 7 | 9.821560E-06 | -1.3380186E-04 | -5.450000E-05 |
| 8 | -2.065710E-07 | 4.3658573E-06 | 1.350000E-06 |
| 9 | 1 .845210E-09 | -5.9468409E-08 | -1.410000E-08 |

(E et le nombre qui le suit représentent l'exposant en puissance de 10).

**16.** Gamme selon la revendication 15, caractérisée en ce que lesdites fonctions A(h) et B(h) sont identiques, les coefficients $\alpha_{2i}$ et $\beta_{2i}$ étant pris dans une même dite liste.

**17.** Gamme selon la revendication 15, caractérisée en ce que lesdites fonctions A(h) et B(h) sont différentes, les

coefficients $\alpha_{2i}$ et $\beta_{2i}$ étant pris dans deux dites listes distinctes.

**18.** Procédé pour obtenir un jeu de deux lentilles ophtalmiques à vision simultanée progressive conforme à l'une quelconque des revendications 1 à 8 pour corriger la vision d'un porteur presbyte, caractérisé en ce qu'il comporte les étapes suivantes :

a) une étape de détermination de l'addition nécessaire audit porteur et, pour chacun des deux yeux dudit porteur, de la puissance respective nécessaire pour corriger son éventuelle myopie ou hypermétropie ;

b) une étape de détermination, parmi les deux yeux dudit porteur, de celui, dit second oeil, qui offre la meilleure tolérance à une défocalisation myopique, c'est-à-dire au flou introduit par une lentille ayant une puissance positive ;

c) une étape de sélection, dans la gamme de lentilles selon l'une quelconque des revendications 15 à 17, de la lentille de la série (2) de lentilles de premier type dont la puissance $P_n$ est égale à la puissance nécessaire pour corriger l'éventuelle myopie ou hypermétropie du premier oeil dudit porteur ;

d) une étape de sélection, dans ladite gamme, de la lentille de la série (3) de lentilles de second type dont la puissance $P_m$ est égale à la somme de la puissance nécessaire pour corriger l'éventuelle myopie ou hypermétropie du second oeil du porteur et de l'addition dudit porteur.

**19.** Procédé selon la revendication 18, caractérisé en ce qu'il comporte en outre les étapes d'optimisation suivantes :

- une étape de recherche, en vision de loin, de la lentille de la série (2) de lentilles de premier type dont la puissance $P_n$ est la plus grande possible acceptée par le porteur ;
- une étape de recherche, en vision de près, de la lentille de la série (3) de lentilles de second type dont la puissance $P_m$ est la plus petite possible acceptée par le porteur ; et
- éventuellement, une répétition alternative des deux étapes précédentes jusqu'à l'obtention du meilleur compromis.

**20.** Procédé selon la revendication 19, caractérisé en ce que lesdites étapes d'optimisation sont conduites en vision binoculaire.

FIG.1

FIG.2

FIG.3

FIG.4

FIG.5

EP 1 116 983 A1

FIG. 6

FIG. 7

EP 1 116 983 A1

FIG.8

FIG.9

FIG.10

FIG.11

FIG.12

FIG.13

FIG.14

**Office européen des brevets**

**RAPPORT DE RECHERCHE EUROPEENNE**

Numéro de la demande

EP 00 40 3664

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | EP 0 611 979 A (ESSILOR INT) 24 août 1994 (1994-08-24) * page 3, ligne 11 - page 4, ligne 11 * --- | 1 | G02C7/04 |
| D,A | FR 2 737 312 A (ESSILOR INT) 31 janvier 1997 (1997-01-31) * page 5, ligne 6 - page 7, ligne 5 * --- | 1 | |
| A | EP 0 780 718 A (JOHNSON & JOHNSON VISION PROD) 25 juin 1997 (1997-06-25) * page 3, ligne 39 - page 5, ligne 47 * --- | 1 | |
| A | EP 0 453 136 A (PILKINGTON DIFFRACTIVE LENSES) 23 octobre 1991 (1991-10-23) * colonne 6, ligne 50 - colonne 8, ligne 36 * ----- | 1 | |

**DOMAINES TECHNIQUES RECHERCHES (Int.Cl.7)**

G02C

Le présent rapport a été établi pour toutes les revendications

| Lieu de la recherche | Date d'achèvement de la recherche | Examinateur |
|---|---|---|
| LA HAYE | 31 janvier 2001 | Sarneel, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 00 40 3664

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2001

| Document brevet cité au rapport de recherche | | Date de publication | Membre(s) de la famille de brevet(s) | | Date de publication |
|---|---|---|---|---|---|
| EP 0611979 | A | 24-08-1994 | FR | 2701770 A | 26-08-1994 |
| | | | CA | 2115804 A | 19-08-1994 |
| | | | DE | 69400532 D | 24-10-1996 |
| | | | DE | 69400532 T | 20-03-1997 |
| | | | ES | 2092380 T | 16-11-1996 |
| | | | JP | 6250127 A | 09-09-1994 |
| | | | US | 5530491 A | 25-06-1996 |
| FR 2737312 | A | 31-01-1997 | US | 5699141 A | 16-12-1997 |
| EP 0780718 | A | 25-06-1997 | US | 5835192 A | 10-11-1998 |
| | | | JP | 9182767 A | 15-07-1997 |
| EP 0453136 | A | 23-10-1991 | AT | 158088 T | 15-09-1997 |
| | | | AU | 634051 B | 11-02-1993 |
| | | | AU | 7501491 A | 24-10-1991 |
| | | | CA | 2040579 A | 18-10-1991 |
| | | | DE | 69127576 D | 16-10-1997 |
| | | | DE | 69127576 T | 26-02-1998 |
| | | | ES | 2108705 T | 01-01-1998 |
| | | | JP | 4227258 A | 17-08-1992 |
| | | | US | 5296881 A | 22-03-1994 |

EPO FORM P0460

Pour tout renseignement concernant cette annexe : voir Journal Officiel de l'Office européen des brevets, No.12/82